# EUROPÄISCHE PATENTSCHRIFT

(11) **EP 2 433 331 B1**
(45) Veröffentlichungstag und Bekanntmachung des Hinweises auf die Patenterteilung: **27.09.2017**
(21) Anmeldenummer: 10712400.0
(22) Anmeldetag: 25.03.2010
(51) Int. Cl.: H01M 10/637, H01M 10/615, H01M 10/48, H01M 10/42

(54) **VERFAHREN UND SCHALTUNGSANORDNUNG ZUM ERWÄRMEN EINES ELEKTRISCHEN ENERGIESPEICHERS**
METHOD AND CIRCUIT ARRANGEMENT FOR HEATING AN ELECTRIC ENERGY STORE
PROCÉDÉ ET CIRCUIT POUR CHAUFFER UN ACCUMULATEUR D'ÉNERGIE ÉLECTRIQUE

(30) Priorität: 18.05.2009 DE 102009003180
(43) Veröffentlichungstag der Anmeldung: 28.03.2012
(73) Patentinhaber: Robert Bosch GmbH, 70442 Stuttgart (DE)
(72) Erfinder: FINK, Holger, 70567 Stuttgart (DE)
(86) Internationale Anmeldenummer: PCT/EP2010/053940
(87) Internationale Veröffentlichungsnummer: WO 2010/133392

(56) Entgegenhaltungen:
- EP-A2- 1 648 048
- WO-A2-2008/051979
- DE-A1-102007 017 980
- US-A- 5 504 415
- US-A1- 2005 130 037
- US-A1- 2005 174 092
- US-A1- 2007 105 010

## Beschreibung

Die Erfindung betrifft ein Verfahren zum Erwärmen eines mehrere Speicherzellen aufweisenden elektrischen Energiespeichers.

### Stand der Technik

Ein derartiges Verfahren zum Erwärmen eines mehrere Speicherzellen aufweisenden elektrischen Energiespeichers ist zum Beispiel für den elektrischen Energiespeicher eines Antriebssystems eines Hybrid- oder Elektrofahrzeugs bekannt. Der elektrische Energiespeicher umfasst dabei zum Beispiel mehrere als wiederaufladbare Batterien ausgebildete Speicherelemente mit als Batteriezellen ausgebildeten Speicherzellen. Die einzelnen Batteriezellen der Batterien werden in Serie und/oder parallel geschaltet, um an das Antriebssystem angepasste Leistungs- und/oder Energiedaten zu erhalten.

Die Batterie weist weiterhin ein Thermomanagement-System mit einer Steuer- und/oder Regeleinrichtung zur Regelung der Speichertemperatur auf. Das Thermomanagement-System der Batterie erwärmt oder kühlt dazu die Batterie mittels des Klimakreislaufs des Fahrzeugs oder eines separaten Kühlmittelkreislaufes für die Batteriezellen, also einer zusätzlichen Temperier-Vorrichtung.

Ein solches Thermomanagement ist erforderlich, um die Batterie in einem für deren Lebensdauer optimalen Temperaturintervall zu betreiben und/oder die Batterie außerhalb dieses bevorzugten Temperaturintervalls nur mit reduzierter Leistung zu betreiben, um eine übermäßige Alterung bzw. Schädigung der Batteriezellen zu vermeiden. Bei Batterien, die als Lithium-Ionen Batterien gemäß heutigem Stand der Technik ausgebildet sind, liegt das bevorzugte Temperaturintervall zwischen 0° und 40°C.

Da selbst in gemäßigten Breiten - zum Beispiel an kalten Wintertagen - Außentemperaturen unterhalb von 0° C auftreten, müssen die Batterien von Hybrid- oder Elektrofahrzeugen unter diesen Bedingungen für einen Betrieb mit voller Leistung insbesondere erwärmt werden.

Die Druckschrift US 5 504 415 A offenbart ein Verfahren und eine Vorrichtung zur automatischen Anpassung von Batteriezuständen von in Serie geschalteten Batterien, wobei eine Spannung der jeweiligen Batterie während eines Ladevorgangs erfasst wird und in Abhängigkeit eines Ladezustands der jeweiligen Batterie, diese Batterie geladen oder entladen wird, wodurch die Batteriezustände der Batterien einander angepasst werden.

### Offenbarung der Erfindung

Das erfindungsgemäße Verfahren mit den in Anspruch 1 genannten Merkmalen bietet den Vorteil, dass das Verfahren zusätzlich zu den aus dem Stand der Technik bekannten Maßnahmen zum Erwärmen genutzt werden kann.

Erfindungsgemäß ist der Energiespeicher an eine Zellausgleichs-Schaltungsanordnung angeschlossen, die zu einer Energieentnahme von Energie aus den Speicherzellen, einer Zwischenspeicherung der entnommenen
Energie in mindestens einem elektrischen Speicherelement und einer zumindest teilweisen Rückspeisung der zwischengespeicherten Energie in den Energie20 speicher geeignet ist, wobei zur Erwärmung des Energiespeichers die Energieentnahme, die Zwischenspeicherung und die Rückspeisung in Abhängigkeit der Speichertemperatur des Energiespeichers erfolgt.

Die Zellausgleichs-Schaltungsanordnung wird auch als "Cell-Balancer" bezeichnet und dient zu einem Ladungsausgleich, sodass die insbesondere in Serie geschalteten Speicherzellen des Energiespeichers alle den gleichen Ladezustand und damit die gleiche Zellspannung aufweisen. Aufgrund der geringfügig unterschiedlichen Kapazitäten und geringfügig unterschiedlichen Selbstentladungen der Zellen würde der Ladezustand der unterschiedlichen Zellen ohne den Zell ausgleich (das "Cell-Balancing") im Betrieb auseinanderdriften. Generell kann der Zellausgleich mittels einer Zellausgleichs-Schaltungsanordnung mit resistiven Bauelementen (ohmschen Widerständen) oder mit elektrischen Bauelementen zur Zwischenspeicherung der elektrischen Energie (kurz: elektrische Speicherelemente), wie kapazitiven Bauelementen und/oder induktiven Bauelementen, er folgen. Zur Durchführung des erfindungsgemäßen Verfahrens ist jedoch die Verwendung einer Zellausgleichs-Schaltungsanordnung mit mindestens einem elekt rischen Bauelement zur Zwischenspeicherung der elektrischen Energie (Speicherelement) notwendig. Derartige Zellausgleichs-Schaltungsanordnungen werden auch als Zellausgleichs-Schaltungsanordnungen zur Ladungs-Umverteilung ("cell balancing circuits for charge redistribution") bezeichnet.

Durch Energieentnahme aus den Speicherzellen und Rückspeisung in die Speicherzellen mittels der Zellausgleichs-Schaltungsanordnung kommt es durch die Verlustleistung im jeweiligen Innenwiderstand einer Speicherzelle zur deren Erwärmung.

Unter einem elektrischen Energiespeicher im Sinne der vorliegenden Erfindung ist ein Energiespeicher zu verstehen, dem elektrische Energie zugeführt und entnommen werden kann. Der elektrische Energiespeicher ist als Ladungsspeicher und/oder magnetischer Energiespeicher und/oder elektrochemischer Energiespeicher ausgebildet.

Es ist zweckmäßig, dass der Energiespeicher als elektrochemischer Energiespeicher, insbesondere als eine wiederaufladbare Batterie (Akkumulator), ausgebildet ist. Bevorzugt ist der Akkumulator ein Lithium-Ionen Akkumulator. Ein Akkumulator weist die für das erfindungsgemäße Verfahren wichtige Eigenschaft der Wiederaufladbarkeit auf.

Im Allgemeinen kann das elektrische Speicherelement als induktives Bauelement oder als kapazitives Bauelement ausgebildet sein. Bevorzugt ist vorgesehen, dass das elektrische Speicherelement zur Zwischenspeicherung der elektrischen Energie ein induktives Bauelement ist. Die Zwischenspeicherung mittels eines induktiven Bauelements ist besonders effizient. Das induktive Bauelement ist besonders bevorzugt eine Drosselspule und/oder eine Übertragerspule.

Gemäß einer bevorzugten Ausführungsform der Erfindung erfolgt die Zwischenspeicherung der Energie einer jeden der Speicherzellen in mindestens einem dieser Speicherzelle zugeordneten Speicherelement. Die Speicherelemente sind innerhalb der Zellausgleichs-Schaltungsanordnung derart angeordnet, dass sie bei an den Energiespeicher angeschlossener Zellausgleichs-Schaltungsanordnung zur Ausbildung eines jeweiligen Stromkreises verschaltet sind.

Mit Vorteil ist vorgesehen, dass die aus einer der Speicherzellen entnommene Energie in diese Speicherzelle vollständig rückgespeist wird beziehungsweise die aus mehreren Speicherzellen entnommene Energie in diese Speicherzellen vollständig rückgespeist werden.

Alternativ oder zusätzlich ist vorgesehen, dass die aus einer der Speicherzellen entnommene Energie in mindestens eine andere der Speicherzellen vollständig rückgespeist wird. Dabei wird in die Speicherzelle, aus der die Energie entnommen wurde nichts von dieser entnommenen Energie rückgespeist.

Weiterhin ist vorgesehen, dass die aus einer der Speicherzellen entnommene Energie zum einen Teil in diese eine Speicherzelle und zum anderen Teil in mindestens eine andere der Speicherzellen rückgespeist wird.

Die Erfindung betrifft weiterhin eine Zellausgleichs-Schaltungsanordnung zur gleichmäßigen Entnahme von elektrischer Energie aus den Speicherzellen eines elektrischen Energiespeichers mit den in Anspruch 7 genannten Merkmalen. Erfindungsgemäß ist die Zellausgleichs-Schaltungsanordnung als Zellausgleichs-Schaltungsanordnung zur Energieentnahme aus den Speicherzellen, zur Zwischenspeicherung der entnommenen Energie in mindestens einem elektrischen Speicherelement und zur zumindest teilweisen Rückspeisung der zwischengespeicherten Energie in den Energiespeicher ausgebildet, wobei die Zellausgleichs-Schaltungsanordnung das Speicherelement, eine Steuer-/Regelvorrichtung zur Steuerung und/oder Regelung der Energieentnahme, der Zwischenspeicherung und der Rückspeisung und eine Einrichtung zur Bestimmung der Speichertemperatur aufweist und die Steuer-/Regelvorrichtung zur temperaturabhängigen Energieentnahme, Zwischenspeicherung und Rückspeisung mit der Einrichtung zur Bestimmung der Speichertemperatur signaltechnisch verbunden ist. Eine derartige Schaltungsanordnung wird auch "Cell-Balancer" genannt. Diese Zellausgleichs-Schaltungsanordnung bietet den Vorteil, dass sie einerseits zur gleichmäßigen Entnahme von elektrischer Energie aus den Speicherzellen des elektrischen Energiespeichers -ein sogenanntes "Cell-Balancing"- und alternativ oder zusätzlich für ein Erwärmen des Energiespeichers nutzbar ist.

Gemäß einer bevorzugten Ausführungsform der Erfindung weist die Zellausgleichs-Schaltungsanordnung elektrische Anschlüsse zum elektrischen Anschluss mindestens eines in einem zugeordneten Strompfad angeordneten Speicherelements der Zellausgleichs-Schaltungsanordnung an jeweils eine Speicherzelle zur Ausbildung eines jeweiligen Stromkreises auf.

Gemäß einer besonders bevorzugten Ausführungsform der Erfindung weist die Zellausgleichs-Schaltungsanordnung mindestens ein durch die Steuer-/Regelvorrichtung ansteuerbares Schaltelement auf. Insbesondere ist in jedem der Stromkreise mindestens ein durch die Steuer-/ Regelvorrichtung ansteuerbares Schaltelement angeordnet. Bevorzugt ist zur Ausbildung des jeweiligen Stromkreises jeweils ein Schaltelement zwischen je zwei Strompfaden angeordnet.

Weiterhin ist vorgesehen, dass die Zellausgleichs-Schaltungsanordnung in Stromzweigen zwischen den Strompfaden angeordnete elektrische Halbleiterbauelemente aufweist, die jeweils eine Stromrichtung des Stroms zwischen den Strompfaden vorgeben.

Die Erfindung betrifft weiterhin einen elektrischen Energiespeicher mit mehreren Speicherzellen. Der erfindungsgemäße Energiespeicher weist eine vorangehend genannte Zellausgleichs-Schaltungsanordnung auf.

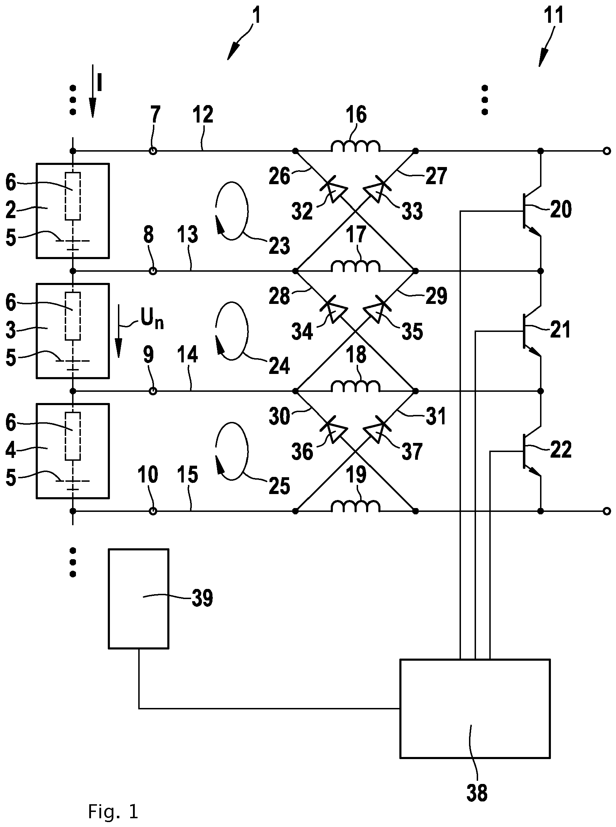

Die Erfindung wird nachfolgend anhand einer einzigen Zeichnung näher erläutert.
Es zeigt die
- Fig.: einen elektrischen Energiespeicher mit einer Zellausgleichs-Schaltungsanordnung gemäß einer bevorzugten Ausführungsform der Erfindung.

Die Fig. zeigt einen elektrischen Energiespeicher 1 mit mehreren elektrisch in Reihe geschalteten Speicherzellen 2, 3, 4, von denen drei Speicherzellen dargestellt sind. Der elektrische Energiespeicher 1 ist als wiederaufladbare Batterie ausgebildet, wobei die Speicherzellen 2, 3, 4 der Batterie als Batteriezellen ausgebildet sind. Jede der Speicherzellen 2, 3, 4 kann ihrerseits in einem Ersatzschaltbild als Serienschaltung einer jeweiligen idealen Spannungsquelle 5 und einem jeweiligen inneren Widerstand 6 dargestellt werden (gestrichelte Linien).

Jede der elektrischen Verbindungen zwischen den Speicherzellen 2, 3, 4 und jeder der (nicht gezeigten) beiden elektrischen Anschlusselemente zur äußeren Beschaltung des Energiespeichers 1 weist einen elektrischen Anschluss 7, 8, 9, 10 zur elektrischen Kontaktierung jeder der Speicherzellen 2, 3, 4 auf.

Der elektrische Energiespeicher 1 ist über die besagten elektrischen Anschlüsse 7, 8, 9, 10 elektrisch an eine Zellausgleichs-Schaltungsanordnung 11, auch Cell-Balancer genannt, angeschlossen, die zu einem Ladungsausgleich der einzelnen Speicherzellen 2, 3, 4 dient und es ermöglicht, dass die in Reihe geschalteten Speicherzellen 2, 3, 4 zu jedem Zeitpunkt einen einander entsprechenden Ladezustand aufweisen.

Die in der Fig. gezeigte Zellausgleichs-Schaltungsanordnung 11 weist eine der Anzahl der Anschlüsse 7, 8, 9, 10 des elektrischen Energiespeichers entsprechende Anzahl von Strompfaden 12, 13, 14, 15 auf, die über die Anschlüsse 7, 8, 9, 10 mit den Speicherzellen 2, 3, 4 elektrisch verbunden sind. In jedem der Strompfade 12, 13, 14, 15 ist ein Speicherelement 16, 17, 18, 19 angeordnet. Die Speicherelemente 16, 17, 18, 19 sind als induktive Bauelemente, insbesondere Drosselspulen und/oder Übertragerspulen ausgebildet. Je zwei jeweils der gleichen Speicherzelle 2, 3, 4 zuordenbare bzw. zugeordnete (benachbarte) Strompfade 12, 13, 14, 15 sind jeweils über ein zugeordnetes Schaltelement 20, 21, 22 zu einem resultierenden Stromkreis 23, 24, 25 mit je zwei Speicherelementen 16, 17, 18, 19 schaltbar. Die Schaltelemente 20, 21, 22 sind bevorzugt als Transistoren, insbesondere Bipolar-Transistoren oder Feldeffekttransistoren, ausgebildet.

Die Zellausgleichs-Schaltungsanordnung 11 weist weiterhin Stromzweige 26, 27, 28, 29, 30, 31 auf, die paarweise je zwei der gleichen Speicherzelle 2, 3, 4 zuordenbare bzw. zugeordnete Strompfade 12, 13, 14, 15 elektrisch verbinden. In jedem der Stromzweige 26, 27, 28, 29, 30, 31 ist ein Halbleiterbauelement 32, 33, 34, 35, 36, 37, insbesondere eine Diode, angeordnet, die jeweils eine Stromrichtung des Stroms zwischen den Strompfaden 12, 13, 14, 15 vorgibt.

Jedes der Schaltelemente 20, 21, 22 ist zu seinem Ansteuern signaltechnisch mit einer Steuer-/Regelvorrichtung 38 verbunden, die bevorzugt Teil eines Energiespeicher-Managementsystems (Batterie-Management-Systems) ist. Die Steuer-/Regelvorrichtung 38 gleich durch beschalten der Schaltelemente 20, 21, 22 in Abhängigkeit vom Ladungszustand der einzelnen Speicherzellen 2, 3, 4 den Ladungszustand der einzelnen 2, 3, 4 Zellen einander an, indem sie einzelnen Speicherzellen 2, 3, 4 Ladung entnimmt und anderen Zellen 2, 3, 4 zuführt. Dies ist die ursprüngliche Aufgabe der Zellausgleichs-Schaltungsanordnung 11, die hier nicht weiter beschrieben werden soll.

Erfindungsgemäß ist die Steuer-/Regelvorrichtung 38 signaltechnisch mit einer Einrichtung zur Bestimmung einer Speichertemperatur 39
- zur Energieentnahme aus den Speicherzellen 2, 3, 4,
- zur Zwischenspeicherung der entnommenen Energie in mindestens einem elektrischen Speicherelement 16, 17, 18, 19 und
- zur zumindest teilweisen Rückspeisung der zwischengespeicherten Energie in den Energiespeicher 1
in Abhängigkeit von der Speichertemperatur des Energiespeichers 1 verbunden.

Es ergibt sich folgende Funktion: zum Erwärmen des mehrere Speicherzellen 2, 3, 4 aufweisenden elektrischen Energiespeichers 1 erfolgt die Energieentnahme (bzw. die Ladungsentnahme) aus einer oder mehreren der Speicherzellen 2, 3, 4, die Zwischenspeicherung der entnommenen Energie in den Speicherelementen 16, 17, 18, 19 und die Rückspeisung der zwischengespeicherten Energie in eine oder mehrere der Speicherzellen 2, 3, 4, in Abhängigkeit der Speichertemperatur des Energiespeichers 1.

Durch Energieentnahme aus den Speicherzellen 2, 3, 4 und Rückspeisung in die Speicherzellen 2, 3, 4 mittels der Zellausgleichs-Schaltungsanordnung 11 kommt es durch die Verlustleistung im jeweiligen inneren Widerstand 6 (Innenwiderstand) einer Speicherzelle 2, 3, 4 zu deren Erwärmung.

Insbesondere wird die aus einer der Speicherzellen 2, 3, 4 entnommene Energie in diese Speicherzelle 2, 3, 4 vollständig rückgespeist und/oder die aus einer der Speicherzellen 2, 3, 4 entnommene Energie zum einen Teil in diese eine Speicherzelle 2, 3, 4 und zum anderen Teil in mindestens eine andere der Speicherzellen 2, 3, 4 rückgespeist.

## Patentansprüche

1. Verfahren zum Erwärmen eines mehrere Speicherzellen aufweisenden elektrischen Energiespeichers, wobei der Energiespeicher an eine Zellausgleichs-Schaltungsanordnung angeschlossen ist, die zu einer Energieentnahme von Energie aus den Speicherzellen, einer Zwischenspeicherung der entnommenen Energie in mindestens einem elektrischen Speicherelement und einer zumindest teilweisen Rückspeisung der zwischengespeicherten Energie in den Energiespeicher geeignet ist, wobei zur Erwärmung des Energiespeichers die Energieentnahme, die Zwischenspeicherung und die Rückspeisung in Abhängigkeit der Speichertemperatur des Energiespeichers erfolgt, wobei das elektrische Speicherelement zur Zwischenspeicherung der elektrischen Energie ein induktives Bauelement ist.

2. Verfahren nach Anspruch 1, **dadurch gekennzeichnet, dass** die Zwischenspeicherung der Energie einer jeden der Speicherzellen in mindestens einem dieser Speicherzelle zugeordneten Speicherelement erfolgt.

3. Verfahren nach einem der vorhergehenden Ansprüche, **dadurch gekennzeichnet, dass** die aus einer der Speicherzellen entnommene Energie in diese Speicherzelle vollständig rückgespeist wird.

4. Verfahren nach einem der Ansprüche 1 oder 2, **dadurch gekennzeichnet, dass** die aus einer der Speicherzellen entnommene Energie in mindestens eine andere der Speicherzellen vollständig rückgespeist wird.

5. Verfahren nach einem der Ansprüche 1 oder 2, **dadurch gekennzeichnet, dass** die aus einer der Speicherzellen entnommene Energie zum einen Teil in diese eine Speicherzelle und zum anderen Teil in mindestens eine andere der Speicherzellen rückgespeist wird.

## Claims

1. Method for heating an electrical energy store which has a plurality of storage cells, wherein the energy store is connected to a cell balancing circuit arrangement which is suitable for drawing energy from the storage cells, temporarily storing the drawn energy in at least one electrical storage element and feeding back at least some of the temporarily stored energy to the energy store, wherein, in order to heat the energy store, energy is drawn, temporarily stored and fed back depending on the storage temperature of the energy store, wherein the electrical storage element for temporarily storing the electrical energy is an inductive component.

2. Method according to Claim 1, **characterized in that** the energy of each of the storage cells is temporarily stored in at least one storage element which is associated with the said storage cell.

3. Method according to either of the preceding claims, **characterized in that** all of the energy drawn from one of the storage cells is fed back to the said storage cell.

4. Method according to either of Claims 1 and 2, **characterized in that** all of the energy drawn from one of the storage cells is fed back to at least one other of the storage cells.

5. Method according to either of Claims. 1 and 2, **characterized in that** some of the energy drawn from one of the storage cells is fed back to said storage cell and some is fed back to at least one other of the storage cells.

## Revendications

1. Procédé pour chauffer un accumulateur d'énergie électrique comportant plusieurs cellules accumulatrices, dans lequel l'accumulateur d'énergie est raccordé à un circuit d'équilibrage entre cellules qui est approprié pour prélever de l'énergie à partir de cellules accumulatrices, pour stocker temporairement l'énergie prélevée dans au moins un élément accumulateur électrique et pour réinjecter au moins partiellement dans l'accumulateur d'énergie l'énergie stockée temporairement, dans lequel le prélèvement d'énergie, le stockage intermédiaire et la réinjection sont effectués en fonction de la température de l'accumulateur d'énergie pour chauffer l'accumulateur d'énergie, dans lequel l'élément accumulateur électrique destiné à l'accumulation intermédiaire de l'énergie électrique est un composant à induction.

2. Procédé selon la revendication 1, **caractérisé en ce que** l'accumulation intermédiaire de l'énergie de l'une des cellules accumulatrices est effectuée dans au moins un élément accumulateur associé à ladite cellule accumulatrice.

3. Procédé selon l'une quelconque des revendications précédentes, **caractérisé en ce que** l'énergie prélevée à partir de l'une des cellules accumulatrices est entièrement réinjectée dans ladite cellule accumulatrice.

4. Procédé selon l'une quelconque des revendications 1 ou 2, **caractérisé en ce que** l'énergie prélevée à partir de l'une des cellules accumulatrices est entièrement réinjectée dans au moins une autre des cellules accumulatrices.

5. Procédé selon l'une quelconque des revendications 1 ou 2, **caractérisé en ce que** l'énergie prélevée à partir de l'une des cellules accumulatrices est en partie réinjectée dans ladite cellule accumulatrice et en partie réinjectée dans au moins une autre des cellules accumulatrices.
